# FASCICULE DE BREVET EUROPEEN

(11) **EP 1 390 230 B1**
(45) Date de publication et mention de la délivrance du brevet: **02.07.2008**
(21) Numéro de dépôt: 02743332.5
(22) Date de dépôt: 28.05.2002
(51) Int. Cl.: B60P 3/08

(54) **PIECE DE FLANC EN TANT QUE COMPOSANT DE CARROSSERIE POUR UNE UNITE ROUTIERE PORTE-VEHICULES MOTORISEE OU NON**
FLANKENTEIL ALS KAROSSERIEKOMPONENTE FÜR EINEN KRAFTFAHRZEUGTRANSPORTER MIT ODER OHNE MOTORANTRIEB
FLANK PART AS BODY COMPONENT FOR AN AUTOMOBILE TRANSPORTER, WHETHER MOTOR-DRIVEN OR NOT

(30) Priorité: 30.05.2001 FR 0107100
(43) Date de publication de la demande: 25.02.2004
(73) Titulaire: LOHR INDUSTRIE, 67980 Hangenbieten (FR)
(72) Inventeur: ANDRE, Jean-Luc, F-67120 Molsheim (FR)
(74) Mandataire: Metz, Paul
(86) Numéro de dépôt international: PCT/FR2002/001784
(87) Numéro de publication internationale: WO 2002/096705

(56) Documents cités:
- EP-B- 0 718 149
- DE-A- 3 042 739
- US-A- 4 701 086

## Description

La présente invention se rapporte à une pièce de flanc pour la constitution d'une carrosserie de camion ou de remorque destinée au transport par route de véhicules routiers neufs, usagés ou accidentés.

La construction de carrosseries porte-voitures et plus généralement porte-véhicules met en oeuvre des méthodes de solidarisation d'éléments tubulaires par des techniques de mécanosoudure.

Ce type de structure porteuse formant la carrosserie porte-véhicules routiers se compose d'éléments profilés tubulaires solidarisés entre eux en cadres par soudage. Les montants sont convenablement contreventés par des poteaux obliques auxquels viennent s'ajouter des traverses apportant la rigidité mécanique et le soutien nécessaires.

Les moyens de soutien et de levage des plateaux porteurs sont montés déplaçables sur et le long des montants et poteaux verticaux ou obliques situés au droit ou à proximité des articulations de liaison avec les plateaux porteurs adjacents.

Ces moyens de soutien sont réalisés généralement sous la forme de coulisseaux périphériques extérieurs aux tubes de même forme de section se déplaçant le long de ces éléments tubulaires sous l'effet de moyens moteurs par exemple des dispositifs à vis et écrou de translation ou des vérins. L'immobilisation dans une position donnée s'effectue généralement par brochage. A cet effet, les poteaux et montants présentent sur les deux faces opposées gauche et droite c'est-à-dire vers l'extérieur et vers l'intérieur des ouvertures d'engagement d'une broche de blocage.

Un exemple de ce type de fabrication se trouve dans le brevet américain n° 3690717 au nom de TAYLOR.

La technique de fabrication du véhicule porte-voitures décrit dans ce brevet met en oeuvre des profilés tubulaires de section carrée mécanosoudés à des longerons pour former une structure générale de flanc en cadre rapportée sur une base-châssis.

Sur des poteaux de levage sont montés des coulisseaux actionnés en translation le long de ces poteaux par des vérins montés articulés par leur base sur l'élément inférieur longitudinal de la structure de flanc. Les coulisseaux portent chacun une articulation de liaison à un plateau porteur d'une voiture.

Cette constitution est peu pratique d'utilisation. Elle conduit à une carrosserie particulièrement sensible à la corrosion, à des moyens de levage mal protégés des intempéries et des chocs et de surcroît à une apparence générale peu esthétique en raison de la corrosion, des ouvertures sur les poteaux et des composants, pièces, conduits, fils et câbles d'alimentation et de commande visibles et mal répartis.

De plus, ce type de structure tubulaire de flanc constitue un corps raide en torsion qui rigidifie trop le châssis et génère des risques de fissures qui peuvent apparaître suite aux sollicitations dues à la charge et aux mouvements dynamiques provoqués par la mise en déplacement, le roulage et l'arrêt de la base routière sur laquelle la structure est montée.

On multiplie les points de liaisons entre les flancs tubulaires et le châssis pour diviser en parallèle les concentrations de contraintes.

Par ailleurs, cette structure tubulaire de flanc mécanosoudée résiste très mal à la corrosion en raison de la multiplicité des corps creux formant des volumes quasi fermés dans lesquels l'air humide immobile se condense facilement.

Cette aptitude à la corrosion est encore amplifiée par la difficulté de traiter les faces internes et externes des profilés tubulaires de guidage ainsi que les faces internes des coulisseaux.

Par ailleurs également, les opérations de montage sont condamnées à rester du domaine artisanal car difficiles à automatiser et à réaliser en série. Un simple exemple de difficultés de réalisation rencontrées concerne le coulisseau qui se déplace le long du tube sous l'effet des moyens moteurs pour l'élévation ou l'abaissement des plateaux. Il faut en effet enfiler le coulisseau sur l'élément tubulaire qui le guide alors que le coulisseau est encore libre c'est-à-dire avant le soudage du guide aux profilés tubulaires voisins pour former un cadre.

Il faut signaler aussi d'importantes difficultés d'entretien, de réparation et de maintenance car le remplacement ou la dépose d'un coulisseau nécessite de dessouder le tube qui le porte.

Finalement, ces réalisations se caractérisent aussi par une multitude de traverses rendant l'ensemble plus long à fabriquer, mais aussi plus lourd et plus cher.

De façon générale, selon cette technique de fabrication, l'ordre imposé pour la succession des opérations de montage doit être respecté. Il ne peut être modifié en aucune façon et notamment pour des raisons de gain en temps de montage ou de rationalisation liées par exemple à la disposition des lieux ou à l'efficacité du travail. Dans ces conditions, aucune réelle amélioration ne peut être envisagée sans sortir franchement du cadre de cette technique de fabrication.

De plus, le cycle de fabrication doit être modifié en fonction du châssis particulier à équiper, chaque châssis représentant des contraintes dimensionnelles et d'accessibilité différentes.

La présente invention a pour but de remédier à ces divers inconvénients en changeant entièrement la technique de fabrication et en proposant une pièce de flanc entièrement constituée et finie et produite en série par une fabrication parallèle venant dans le processus de montage de la carrosserie porteuse comme un véritable sous-ensemble à assembler aux autres composants par des opérations simples et rapides ne nécessitant pas une main d'oeuvre hautement qualifiée.

La présente invention se rapporte à une pièce de flanc de carrosserie porte-véhicules entièrement constituée c'est-à-dire fonctionnellement complète et finie, comportant les moyens de levage des plateaux supportant les véhicules.

Elle est constituée d'une pluralité de profilés composites formant poteaux et présentant une face externe plate traitée et peinte aux couleurs caractéristiques du client et une face interne technique formant un guide pour le moyen de levage correspondant se déplaçant le long de ce poteau et se trouvant relié au plateau porteur adjacent par une articulation de pivotement en vue de son déplacement et de son inclinaison.

L'espace intermédiaire entre les deux faces constitue un volume abrité dans lequel sont logés les moyens moteurs actionnant les moyens de levage.

De nombreux avantages découlent de la présente invention :
- grâce à sa constitution en sous-ensembles entièrement terminés, la production peut se rationaliser ;
- la pièce de flanc est compatible avec les plateaux utilisés habituellement, ce qui permet de garantir à l'utilisateur de retrouver exactement son mode opératoire et donc ses habitudes et son savoir-faire ;
- les principes de chargement et de déchargement n'ont pas changé, les poteaux sont restés au même endroit. La cinématique est conservée. L'utilisateur garde sa façon de travailler et ses habitudes de savoir-faire ;
- les profilés ne présentent aucune section fermée. Au contraire il s'agit de deux plats formant la face externe et la face interne reliées entre elles par une âme.

Cette constitution évite la condensation à l'intérieur des volumes creux et offre donc d'emblée une meilleure résistance à la corrosion.

Cette constitution permet aussi de créer un volume intérieur abrité, non visible en vue frontale dans lequel seront logés les moyens moteurs de chaque dispositif de levage.

Cette solution procure en outre la possibilité d'assurer la protection des dispositifs de levage et des moyens moteurs des chocs, des projections et autres agressions venant de l'extérieur.

Cette constitution permet finalement de préparer facilement les faces visibles par un traitement neutre anticorrosion et de ne peindre que la face externe de la pièce de flanc aux couleurs du client. La face interne peut être préparée définitivement par un traitement et une couche finale identiques pour toutes les pièces de flanc.
- chaque pièce de flanc est souple en torsion et ne rigidifie pas excessivement le châssis ;
- le coût en main-d'oeuvre se trouve notablement réduit car le soudage empêche une peinture préalable ;
- la présentation et l'aspect du produit sont attrayants, tous les moyens de levage sont cachés par les faces extérieures des poteaux et toutes les liaisons fluidiques cheminent sur les faces internes et ne sont donc pas visibles de l'extérieur ;
- l'entretien et la réparation sont facilités du fait de l'accès aisé aux moyens de levage et il n'est pas nécessaire de démonter les flancs pour remplacer ou déposer les pièces mobiles ;
- la souplesse de production souhaitée et non évidente pour ce type de produit est enfin obtenue.

D'autres caractéristiques et avantages de l'invention apparaîtront dans la description qui suit, donnée à titre d'exemple et accompagnée des dessins dans lesquels :

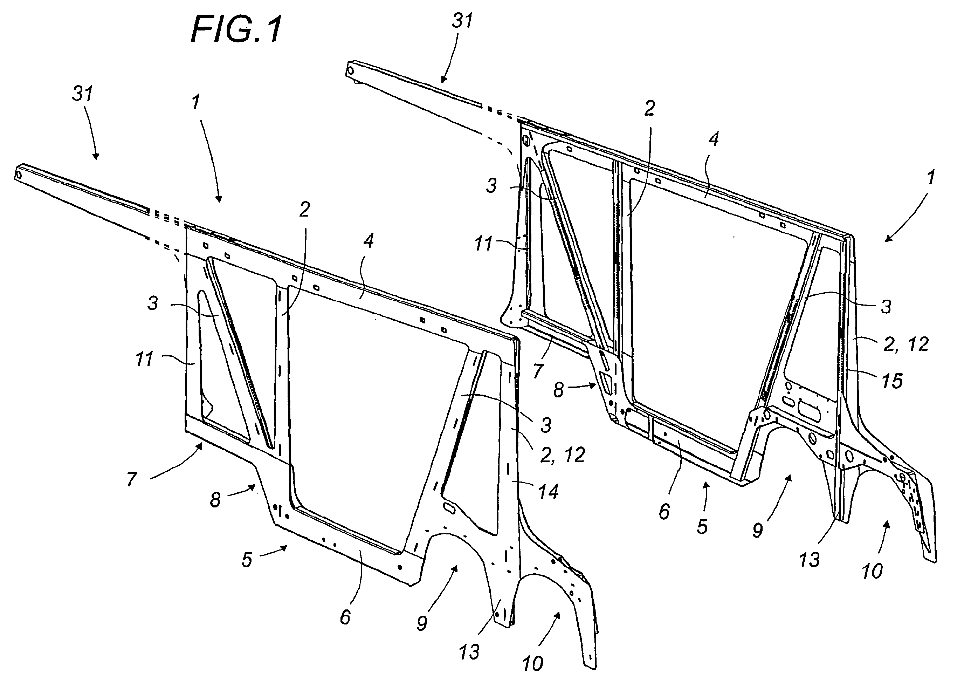

- la figure 1 est une vue en perspective montrant deux pièces de flanc dressées en position d'utilisation non équipées des coulisseaux du système de levage et de soutien ;

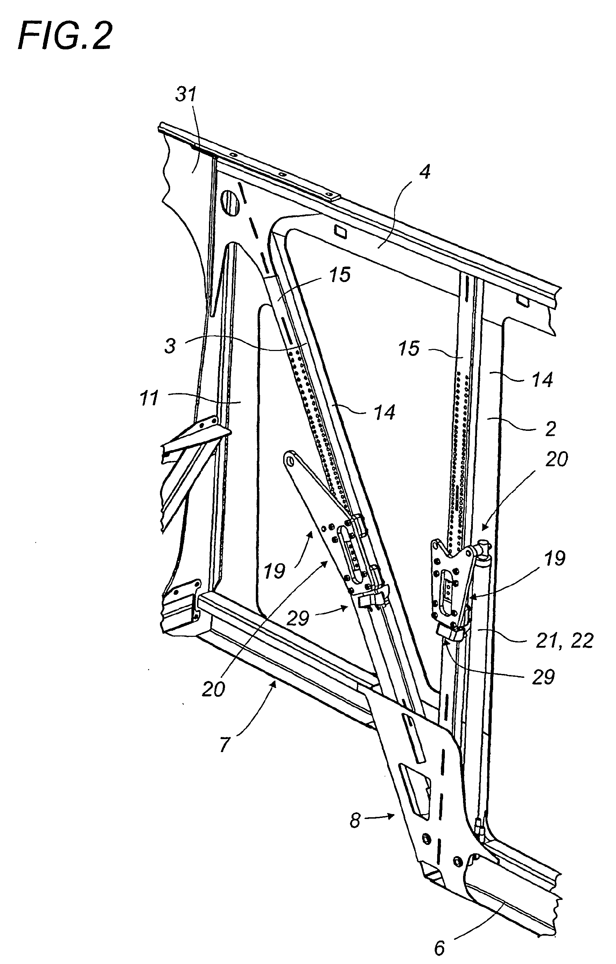

- la figure 2 est une vue fractionnaire en perspective montrant la partie centrale et la partie avant d'une des pièces de flanc vue de face arrière avec les coulisseaux du système de levage ;
- la figure 3 est une vue en perspective à plus grande échelle de deux coulisseaux sur poteaux porteurs l'un montant et l'autre oblique ;
- les figures 4 et 5 sont des vues en perspective respectivement sans et avec platine de fixation d'un exemple de réalisation technique de coulisseau monté sur le plat de face interne d'un poteau porteur, les âmes représentées en traits brisés sont optionnelles.

La pièce de flanc 1 pour la carrosserie d'une unité routière motorisée ou non de transport de véhicules se présente sous la forme d'un ensemble fonctionnel fini prêt à être monté pour constituer après assemblage avec les autres composants une structure complète porte-véhicules équipée de ses plateaux porteurs (non représentés) et autres moyens de fonctionnement.

La pièce de flanc est constituée de poteaux montants tels que 2 et obliques tels que 3 simples ou composites solidarisés entre eux à leur extrémité supérieure par des longerons supérieurs tels que 4 et solidarisés par leurs extrémités inférieures à une base longitudinale mécanique 5. Cette base est formée par exemple, d'un longeron inférieur 6 de partie centrale suivi vers l'avant par un longeron inférieur d'extrémité avant 7 après un décrochement 8 vers le haut, longeron inférieur central suivi vers l'arrière par deux arches successives 9 et 10 entourant les roues arrière.

La pièce de flanc est fermée à chacune de ses extrémités d'une part par un montant avant 11 et d'autre part par un montant arrière 12 se prolongeant vers le bas par une jambe médiane 13 située entre les deux arches 9 et 10.

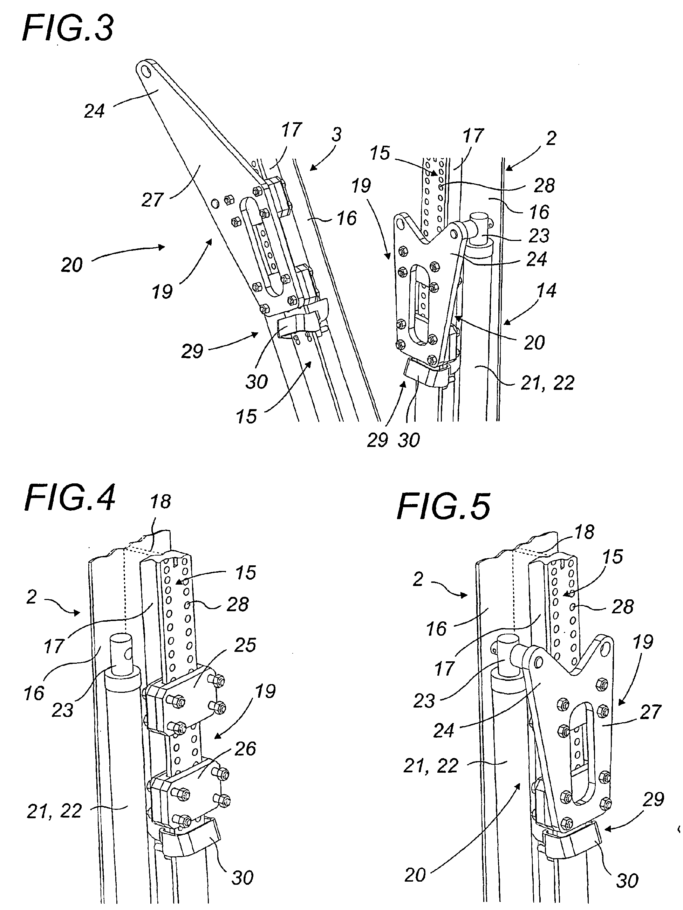

Certains poteaux dits poteaux porteurs contiennent des moyens de levage destinés à supporter les plateaux mobiles porteurs par exemple individuels pour le transport des véhicules routiers (non représentés). Au moins tous les poteaux porteurs et de préférence les autres également, présentent une section droite non fermée pour ne pas former de corps creux. Ils comportent une face externe et une face interne respectivement 14 et 15 par exemple, mais non obligatoirement planes, appartenant à deux corps rectilignes distincts ou réunis par exemple profilés sous la forme par exemple d'un plat ou cache 16 et d'un plat de guidage 17 éventuellement réunis entre eux par une âme 18. Cette éventualité est matérialisée sur les figures 4 et 5 par une représentation de l'âme 18 en traits brisés. Des profilés simples ou composites ou des éléments rectilignes présentant une forme générale de section droite en I ou en H ou même des éléments rectilignes composés de deux pièces rectilignes séparées conviennent pour ce type d'application. Cependant, l'invention n'est pas limitée à des éléments rectilignes ou profilés à faces planes ou formés de plats.

On appelle face externe celle qui se trouve tournée vers l'extérieur de la carrosserie porteuse et par opposition face interne celle qui se trouve tournée vers l'intérieur de la carrosserie porteuse.

Dans un mode particulier de réalisation, pour obtenir l'effet de masquage visuel, la face externe sera de préférence plus large que la face interne. Ce genre de forme est choisi pour des considérations techniques mais également pour des raisons d'aspect. Ces éléments rectilignes présentent une face externe de largeur plus importante que celle de la face interne, permettant d'offrir une surface frontale externe peinte de poids esthétique suffisant pour procurer un aspect d'ensemble engendrant une impression de propreté.

En effet, la face externe étant de largeur plus importante que la face interne, masque esthétiquement celle-ci, ce qui permet de cacher visuellement la face interne et les dispositifs ou organes montés sur la partie arrière ou interne du profilé ou élément rectiligne ou à proximité immédiate lors d'une vision en vue de face ou légèrement en oblique. Or, c'est précisément sous cet angle que l'on voit le plus souvent la structure porte-voitures. La vue en long de l'arrière n'est pas intéressante et la vue en long de l'avant est totalement occultée par la cabine.

Cette face externe sera peinte aux couleurs du client selon ses exigences alors que la face interne ne présentant pas d'intérêt visuel, sera traitée pour répondre aux exigences techniques de protection aux agressions extérieures.

L'invention ne se limite pas à une forme de section droite prédéterminée ni à un élément rectiligne d'une seul pièce ou monocorps, mais au contraire englobe toutes les formes susceptibles de convenir à savoir celles qui procurent l'effet de masquage visuel recherché par la face avant appelée ici face externe.

Ainsi, les éléments rectilignes ou profilés constituant les poteaux montants ou obliques non seulement peuvent être monobloc du type profilés venus d'extrusion ou de profilage par tête de filière ou autre technique mais aussi de formes composées à partir de deux ou de plusieurs profilés séparés ou solidarisés longitudinalement ou tout autre.

Ce type d'éléments rectiligne peut être constitué d'un profilé plat servant de guide fixé de façon amovible par exemple par ses extrémités à la structure de la pièce de flanc à distance d'une pièce de tôle faisant office d'écran visuel c'est-à-dire de cache, mais constituant mécaniquement un élément de la charpente de structure de la pièce de flanc.

On peut aussi utiliser des profilés en H formés par la juxtaposition latérale de deux profilés en T ou par un profilé en T auquel on a adjoint un plat en utilisant la branche verticale du T comme âme ou des éléments composites constitués de deux profilés séparés ou d'un profilé facilement déposable et de son cache linéaire visuel.

On examinera ci-après simultanément le cas d'un profilé de forme de section droite en I dans lequel les plats transversaux sont de largeur différente et le cas d'un plat formant profilé de guidage et de son cache extérieur linéaire en tôle.

Le profilé des poteaux porteurs, pris comme exemple, est formé du plat ou cache 16 de face externe par exemple en tôle regardant vers le côté extérieur de la pièce de flanc lorsqu'elle est montée et du plat de guidage 17 de face interne regardant vers l'intérieur. Le cache 16 et le plat de guidage 17 sont soit séparés et maintenus à distance du cache en des endroits de fixation amovible, soit réunis linéairement de façon continue ou partiellement continue par une âme 18 par exemple également plane.

Cette alternative ressort clairement par la représentation en traits brisés de l'âme 18 sur les figures 4 et 5.

Bien entendu, la face externe 14 du cache 16 et la face interne 15 du plat de guidage 17 ne sont pas forcément planes et la forme de l'élément rectiligne de structure n'est citée ici qu'à titre d'exemple non limitatif.

Pour obtenir l'effet de masquage visuel souhaité, le plat ou cache 16 de face externe présente une largeur plus importante que celle du plat de guidage 17 de face interne.

Le plat de guidage 17 coté interne terminé par la face interne 15 de chaque poteau porteur sert de guide à un coulisseau 19 portant une articulation de liaison avec le plateau porteur adjacent (non représentés).

Chaque coulisseau 19 est actionné en déplacement vers le haut en élévation par un moyen moteur d'un dispositif de levage 20 et est retenu vers le bas par un moyen de soutien intégré ou non au moyen de levage. Comme moyen moteur du dispositif de levage ou du dispositif de soutien et de levage on peut citer à titre d'exemple un vérin actionneur 21 dont le corps cylindrique 22 est monté sur la face interne du plat 16 de face externe près de ou contre l'âme 18 de manière à le rendre invisible lorsque l'on regarde la pièce de flanc en vue de face ou monté dans l'espace délimité par les deux plats 16 et 17.

Chaque tige 23 du vérin actionneur 21 est articulée sur une extension latérale 24 d'un coulisseau 19.

Les coulisseaux 19 sont deux blocs mécaniques coulissants 25 et 26 par exemple du type mâchoire dont les deux pièces composantes de chaque bloc mécanique enserrent à glissement le plat de guidage 17 de face interne du profilé. L'articulation avec le plateau porteur est montée sur une platine de fixation telle que 27 réunissant deux blocs mécaniques coulissants 25 et 26. Cette platine de fixation 27 présente par exemple l'extension latérale 24 d'articulation de liaison avec le vérin d'actionnement 22. Des perçages ou des ouvertures telles que 28 dans le plat de guidage 17 permettent l'immobilisation mécanique de chaque coulisseau 19 dans une position déterminée de soutien en fonction de la configuration chargée ou déchargée du plateau porteur.

Cette immobilisation peut être réalisée par une broche ou par un dispositif séparé d'immobilisation 29, par exemple à encliquetage dans les ouvertures 28 tel que représenté sur les figures, relié ou non au corps du coulisseau 19. Ce dispositif d'immobilisation 29 comporte une partie mobile transversalement au profilé pourvue d'une poignée de manoeuvre 30 permettant l'actionnement en engagement ou en désengagement par exemple d'un doigt de blocage dans l'une ou l'autre ouverture 28 correspondante. Le dispositif d'immobilisation 29 représenté est du type patin d'immobilisation se déplaçant le long du profilé de guidage. Il se place sous le coulisseau 19 car la position d'immobilisation en soutien est celle qui retient le plateau porteur vers le bas.

Le dispositif d'immobilisation en soutien ou un moyen équivalent peut, bien entendu, être intégré directement dans l'actionneur par exemple à la manière d'un dispositif d'autoverrouillage dans la course du piston ou de la tige du vérin ou un blocage hydraulique.

Chaque pièce de flanc 1 peut être prolongée en partie supérieure avant par un longeron tel que 31 fixé en appui contre le chant supérieur externe frontal du montant avant 11. Ce longeron est destiné à former avec son homologue le support d'une structure en porte-à-faux vers l'avant au-dessus de la cabine du véhicule à moteur pour un plateau porteur supérieur avant supportant un véhicule supplémentaire à transporter ou une partie de celui-ci.

La pièce de flanc 1 décrite ci-dessus constitue un ensemble fini fabriqué séparément prêt à être posé lors du montage final. Ainsi, on monte le plus grand nombre possible de composants sur cette pièce de flanc avant de la rapporter sur le véhicule porteur ou avant de constituer la structure porte-véhicule de la remorque. Chaque véhicule comprendra deux pièces de flanc du type de celle décrite ci-dessus l'une à gauche et l'autre à droite.

Ladite pièce de flanc fait partie avec son homologue d'un ensemble technique constituant la structure complète de carrosserie d'une unité routière porte-véhicules motorisée ou non dans lequel elle se trouve utilisée en deux exemplaires l'un pour chaque flanc.

Elle se trouve assemblée à d'autres sous-ensembles et éventuellement au châssis par des moyens simples la rendant indépendante de la nature particulière de ces sous-ensembles.

## Revendications

1. Pièce de flanc (1) pour la constitution d'une carrosserie porte-véhicules destinée à une unité routière de transport de véhicules neufs, usagés ou accidentés, pièce de flanc (1) formée de profilés ou éléments rectilignes assemblés ou solidarisés en cadres **caractérisée en ce qu'**elle comporte tous les poteaux porteurs avec leur dispositif de levage nécessaires à la manipulation des plateaux porteurs existant sur la carrosserie de l'unité routière, **en ce que** le guidage des dispositifs de levage est réalisé par des profilés de guidage de face interne solidarisés à ou montés dissociables de la structure de la pièce de flanc sur chacun desquels se déplace le coulisseau d'un dispositif de levage doté d'un moyen de soutien intégré ou non et **en ce que** chaque profilé de guidage et le coulisseau ainsi que les moyens d'actionnement de celui-ci sont protégés et masqués visuellement par un cache de face externe formant avec les autres éléments mécaniques de la pièce de flanc la structure mécanique de celle-ci.

2. Pièce de flanc selon la revendication 1 **caractérisée en ce que** chaque profilé de guidage est fixé de façon amovible sur la structure mécanique de la pièce de flanc derrière et à distance d'un cache formant des éléments montants ou obliques de structure de cette pièce de flanc.

3. Pièce de flanc selon la revendication 1 **caractérisée en ce qu'**elle est adaptée à être montée directement ou indirectement sur une base-châssis ou assemblée à d'autres composants constitutifs de la structure porte-véhicules complète en un nombre minimal d'endroits.

4. Pièce de flanc selon la revendication 3 **caractérisée en ce que** le nombre minimal d'endroits au niveau desquels la pièce de flanc (1) est adaptée à être montée est égal à deux.

5. Pièce de flanc selon la revendication précédente **caractérisée en ce que** l'un des endroits de montage de la pièce de flanc est situé au niveau de l'avant de la pièce de flanc et l'autre au niveau de l'arrière de celle-ci.

6. Pièce de flanc selon la revendication précédente **caractérisé en ce qu'**elle est adaptée à être fixée à chacune de ses extrémités à des éléments transversaux de structure formant la carrosserie complète porte-voitures.

7. Pièce de flanc selon la revendication 1 **caractérisée en ce que** le dispositif de levage (20) est un dispositif de levage et de soutien.

8. Pièce de flanc selon la revendication 1 **caractérisée en ce que** chaque moyen d'actionnement de chaque coulisseau est un vérin (21).

9. Pièce de flanc selon la revendication 1 **caractérisée en ce que** chaque profilé de guidage d'un coulisseau (19) présente des perforations ou des ouvertures (28) en succession linéaire.

10. Pièce de flanc selon la revendication 1 **caractérisée en ce qu'**un dispositif d'immobilisation (29) est monté coulissant sur le profilé de guidage d'un coulisseau (19) pour coopérer avec des ouvertures (28) en vue d'immobiliser le coulisseau (19) dans une position de repos et **en ce que** chaque dispositif d'immobilisation présente au moins un élément d'immobilisation (29) s'engageant dans au moins une ouverture (28) du profilé de guidage.

11. Pièce de flanc selon la revendication 1 et 10 **caractérisée en ce que** le dispositif d'immobilisation (29) est intégré au moyen d'actionnement (21).

12. Pièce de flanc selon la revendication 1 **caractérisée en ce que** sa partie supérieure avant est prolongée par un longeron (31) pour constituer un support porteur au-dessus de la cabine.

## Claims

1. A flank piece (1) for the carriage of an automobile transporter designed for a vehicle that transports new, used, or damaged automobiles, said flank piece (1) being formed of rectilinear profiled sections or elements assembled or joined in frames, **characterized in that** it comprises all the supporting posts with the elevating devices necessary to manipulate supporting platforms that exist on the carriage of the vehicle, **in that** the means for guiding the elevating devices is the profiled guide elements on the internal surface integral with or removable from the structure of the flank piece, with the slide on one elevating piece being displaced along each profile quide element and the elevating means having a support means that may or may not be integrated with it ; and **in that** each profiled guide element and the slide, as well as the means for actuating it, are protected and visually screened by a cover on the external surface which, along with the other mechanical elements on the flank piece, forms its mechanical structure.

2. A flank piece according to claim 1 **characterized in that** each profiled guide element is removably attached to the mechanical structure of the rear flank piece and at a distance from a cover forming the upright or oblique elements of the structure of this flank piece.

3. A flank piece according to claim 1 **characterized in that** it is fit to be attached directly or indirectly to a base-chassis or attached with other components constituting the finished vehicle support structure in a minimal number of locations.

4. A flank piece according to claim 3 **characterized in that** the minimal number of locations where the flank piece (1) is fit to be attached is equal to two.

5. A flank piece according to the preceding claim **characterized in that** one of the places where the flank piece is attached is located at the front of the flank piece and the other is located at the rear of the flank piece.

6. A flank piece according to the preceding claim **characterized in that** it is fit to be attached by each extremity to transverse elements on the structure forming the completed vehicle-transporting unit.

7. A flank piece according to claim 1 **characterized in that** the elevating device (20) is an elevating and support device.

8. A flank piece according to claim 1 **characterized in that** each means for actuating each slide is a cylinder (21).

9. A flank piece according to claim 1 **characterized in that** each profiled element for guiding a slide (19) has holes or openings (28) in linear succession.

10. A flank piece according to claim 1 **characterized in that** an immobilization device (29) is slidably attached along the profiled guide element for a slide (19) and cooperates with openings (28) in order to immobilize the slide (19) in the resting position and **in that** each immobilization device has at least one immobilization element (29) engaging in at least one opening (28) on the profiled guide element.

11. A flank piece according to claims 1 and 10 **characterized in that** the immobilization device (29) is integral with the actuating means (21).

12. A flank piece according to claim 1 **characterized in that** its front upper portion extends into a longitudinal beam (31) to form a support platform above the cab.

## Patentansprüche

1. Flankenteil (1) zur Bildung eines Aufbauträgers für Fahrzeuge, der für eine Straßentransporteinheit für neue, gebrauchte oder Unfall-Fahrzeuge bestimmt ist, wobei das Flankenteil (1) aus Profilen oder zusammengebauten geraden Elementen oder einstückig in einem Rahmen ausgebildet ist, **gekennzeichnet dadurch, dass** es alle Tragpfosten mit ihren notwendigen Hebevorrichtungen zur Bewegung der Tragplatten umfasst, die auf der Karosserie der Strassentransporteinheit vorhanden sind, **dadurch, dass** die Führung der Hebevorrichtungen über innenseitige Führungsprofile erfolgt, die einstückig mit der Struktur verbunden sind oder lösbar an der Struktur des Flankenteils montiert sind, wobei auf jedem Profil sich der Schieber einer Hebevorrichtung fortbewegt, die mit einem integrierten Halterungselement versehen ist oder nicht und **dadurch, dass** jedes Führungsprofilstück und der Schieber sowie die Antriebselemente geschützt sind und visuell durch eine außenseitige Verdeckung verborgen sind und mit den anderen mechanischen Elementen des Flankenteils die mechanische Struktur von der letzteren bilden.

2. Flankenteil nach Anspruch 1, **gekennzeichnet dadurch, dass** jedes Führungsprofilstück abnehmbar auf der mechanischen Struktur des Flankenteils, hinter und auf Abstand einer Verdeckung befestigt ist und so Aufsatz- und Schrägelemente der Struktur dieses Flankenteils bildet.

3. Flankenteil nach Anspruch 1, **gekennzeichnet dadurch, dass** es so angepasst ist, um direkt oder indirekt auf einem Fahrgestell montiert zu werden oder mit anderen die vollständige Fahrzeugtragstruktur bildenden Bestandteilen an einer minimalen Anzahl von Stellen zusammengebaut zu werden.

4. Flankenteil nach Anspruch 3, **gekennzeichnet dadurch, dass** die Mindestanzahl von Stellen, auf deren Ebene das Flankenteil (1) angepasst ist, um montiert zu werden, gleich zwei ist.

5. Flankenteil nach dem vorherigen Anspruch, **gekennzeichnet dadurch, dass** eine der Montagestellen des Flankenteils in der Ebene des vorderen Flankenteils und die andere in der Ebene des hinteren Flankenteils liegt.

6. Flankenteil nach dem vorherigen Anspruch, **gekennzeichnet dadurch, dass** es an jedem seiner Enden an schrägen Strukturelementen befestigt ist und so den vollständigen Aufbauträger für Fahrzeuge bildet.

7. Flankenteil nach Anspruch 1, **gekennzeichnet dadurch, dass** die Hebevorrichtung (20) eine Hebe- und Stützvorrichtung ist.

8. Flankenteil nach Anspruch 1 **gekennzeichnet dadurch, dass** jedes Antriebselement jedes Schiebers ein Zylinder (21) ist.

9. Flankenteil nach Anspruch 1, **gekennzeichnet dadurch, dass** jedes Führungsprofilstück eines Schiebers (19) Bohrungen oder Öffnungen (28) in linearer Folge aufweist.

10. Flankenteil nach Anspruch 1, **gekennzeichnet dadurch, dass** eine Blockierungsvorrichtung (29) gleitbar auf dem Führungsprofilstück eines Schiebers (19) montiert ist, um mit Öffnungen (28) zusammenzuwirken, um den Schieber (19) in einer Ruhestellung festzulegen und **dadurch, dass** jede Blockierungsvorrichtung mindestens ein Blockierungselement (29) aufweist, das in mindestens eine Öffnung (28) des Führungsprofilstücks eingreift.

11. Flankenteil nach Anspruch 1 und 10, **gekennzeichnet dadurch, dass** die Blockierungsvorrichtung (29) in das Antriebsmittel (21) integriert ist.

12. Flankenteil nach Anspruch 1, **gekennzeichnet dadurch, dass** sein vorderes Oberteil durch einen Längsträger (31) verlängert ist, um einen Stützträger über der Kabine zu bilden.
